# EUROPÄISCHE PATENTSCHRIFT

(11) **EP 2 585 398 B1**
(45) Veröffentlichungstag und Bekanntmachung des Hinweises auf die Patenterteilung: **11.03.2015**
(21) Anmeldenummer: 11729375.3
(22) Anmeldetag: 20.06.2011
(51) Int. Cl.: B60P 1/48, B66C 23/34

(54) **FAHRZEUG ZUM TRANSPORTIEREN VON BALLASTGEWICHTEN**
VEHICLE FOR TRANSPORTING BALLAST WEIGHTS
VÉHICULE POUR TRANSPORTER DES MASSES DE LESTAGE

(30) Priorität: 23.06.2010 DE 102010024843
(43) Veröffentlichungstag der Anmeldung: 01.05.2013
(73) Patentinhaber: Kramer, Patrick, 79843 Löffingen (DE)
(72) Erfinder: Kramer, Patrick, 79843 Löffingen (DE)
(74) Vertreter: Börjes-Pestalozza, Henrich
(86) Internationale Anmeldenummer: PCT/EP2011/003041
(87) Internationale Veröffentlichungsnummer: WO 2011/160804

(56) Entgegenhaltungen:
- EP-A1- 1 031 530
- DE-A1- 19 958 691
- DE-B- 1 278 708
- DE-U1- 9 015 296
- GB-A- 1 415 928

## Beschreibung

Die Erfindung betrifft ein Fahrzeug, das zum Transportieren zumindest eines Krans sowie der zum Beschweren des Krans bestimmte Ballastgewichte ausgebildet ist, wobei das Fahrzeug eine Ballast-Hebeeinrichtung hat, mittels der Ballastgewichte zwischen einer auf dem Fahrzeug befindlichen Transportstellung und einer auf dem Kran vorgesehenen Gebrauchsstellung bewegbar sind.

Kräne werden beispielsweise auf Baustellen benötigt, um dort schwere und unhandliche Lasten vom Herstellungs- oder Anlieferort an die festgelegte Einbaustätte zu transportieren. Man hat bereits verschiedene Kräne geschaffen, die in einem mehr oder weniger vormontierten Zustand zu der jeweiligen Baustelle verfahren werden können.

So ist in dem Prospekt "Igo MA 13" der Firma Manitowoc Crane Group (USA) bereits ein Kran vorbeschrieben, der auf einem Fahrzeug-Anhänger mit Tandemachse fest montiert ist. Der auf dem Fahrzeug-Anhänger fest montierte Kran lässt sich somit auch über weit entfernte Strecken rasch zu der jeweiligen Baustelle verfahren. An dem vorbekannten Kran sind in den Eckbereichen angeordnete Kran-Standfüße vorgesehen, die mittels integrierter mechanischer Schwerlastwinden derart auf dem Boden absenkbar sind, dass sich der Kran anheben und in die Vertikale ausrichten lässt, bis die an der Tandemachse vorgesehenen Räder vom Boden abheben. Die feste Montage eines kompletten Fahrgestells an dem vorbekannten Kran und die Ausgestaltung dieses Kranes auch als Fahrzeug-Anhänger ist mit erheblichem Aufwand und hohen Kosten verbunden.

Aus dem Prospekt "Igo 32" der Firma Manitowoc Crane Group kennt man auch bereits einen Kran, der derart in eine Transportstellung zusammenlegbar ist, dass unter dem zusammengelegten Kran eine als Tandemachse ausgestaltete Transportachse platziert und fixiert werden kann. Dabei ist an dem einer Zugmaschine zugewandten Endbereich eine Anhängerkupplung vorgesehen, derart, dass der zusammengelegte und für den Transport vorübergehend auf der Transportachse aufliegend fixierte Kran praktisch als Sattelauflieger zur Baustelle verfahren werden kann. Ist der vorbekannte Kran auf der Baustelle platziert, ausgerichtet und in Betrieb genommen worden, wird die Transportachse vom Kran gelöst und andernorts auf der Baustelle zwischengelagert, bis der Abtransport des Kranes die erneute Montage der Transportachse unter dem Kran erfordert. Da die Transportachse nicht für sich allein verfahren und anderweitig vorteilhaft eingesetzt werden kann, ist auch bei diesem Kran die Verfahrbarkeit mit einem erheblichen Aufwand und hohen Kosten verbunden. Dieser Aufwand wird noch dadurch erhöht, dass die erforderlichen Ballast-Gewichte von zumindest einer weiteren Person separat transportiert werden müssen.

In der DE 90 15 296 U1 ist ein Fahrzeug beschrieben, das als Mobilkran ausgestaltet ist. Das vorbekannte Fahrzeug umfasst einen Lastkraftwagen, der nach Art eines Sattelkraftfahrzeuges ausgebildet ist. Auf den Lastkraftwagen ist ein Turmdrehkran mit seinem Grundrahmen nach Art einer Wechselpritsche aufsattelbar. Um den Turmdrehkran vom Lastkraftwagen auf- und abladen zu können, sind an dessen Grundrahmen horizontal nach außen ausfahrbare Stützarme vorgesehen. Damit der zum vorbekannten Fahrzeug dazugehörigen Turmdrehkran über seinen am Gerüst befindlichen Ausleger auch Lasten anheben kann, ist das Krangerüst mit entsprechenden Ballastgewichten zu beschweren. Diese Ballastgewichte müssen unabhängig vom vorbekannten Fahrzeug und dem bereits darauf befindlichen Turmdrehkran mit Hilfe eines weiteren Fahrzeuges transportiert und anschließend umständlich von diesem weiteren Fahrzeug auf das Krangerüst und zurück verlegt werden.

Aus der DE 1 278 708 A ist bereits ein transportabler Turmdrehkran mit einem Untergestell bekannt, das mit einem Drehkranz versehen ist, mit dem das innere Ende eines einfachen und aus mehreren teleskopartig ausziehbaren Teilen bestehenden Mastes verbunden ist, der am äußeren Ende einen Ausleger trägt. Dieser Ausleger ist durch ein Gegengewicht ausgeglichen, das mittels um eine waagrechte Achse schwenkbare Arme an dem zum Transport umgelegten Gerüste anklappbar und mit diesem verriegelbar ist. Bei dem aus DE 1 278 708 A vorbekannten Turmdrehkran ist das Gegengewicht lediglich zum Ausgleich des Auslegers bestimmt. Das Gegengewicht kann daher so klein ausgestaltet werden, dass das während des Transports unterhalb des Gerüstes gehaltene Gegengewicht das Gerüst in seiner quer zur üblichen Lastaufnahmerichtung orientierten Richtung nicht überbelastet. Um insbesondere bei einem größeren Turmdrehkran zusätzlich auch über dessen Ausleger angehobene Lasten ausgleichen zu können, sind gegebenenfalls zusätzliche Ballastgewichte erforderlich, die jedoch nicht mehr während des Transports unterhalb des Gerüstes gehalten und transportiert werden können. Der Transport zusätzlicher Ballastgewichte macht daher auch bei dem aus DE 1 278 708 A vorbekannten Turmdrehkran ein zusätzliches Fahrzeug erforderlich, wobei auch hier die Ballastgewichte anschließend umständlich zwischen diesem zusätzlichen Fahrzeug einerseits und dem Turmdrehkran andererseits bewegt und verlegt werden müssen. Da die zum Ausgleich des Auslegers bestimmten Gegengewichte lediglich mittels der um eine waagrechte Achse schwenkbaren Arme an das Gerüst anklappbar und mit diesem verriegelbar sind, und da bei dem aus DE 1 278 708 A vorbekannten Turmdrehkran keine Ballast-Hebeeinrichtung vorgesehen ist, mittels der Ballastgewichte zwischen einem Transportfahrzeug einerseits und dem Turmdrehkran andererseits bewegt und verlegt werden könnten, ist auch bei dem aus DE 1 278 708 A vorbekannten Turmdrehkran der Transport und der Aufbau des Kranes mit einem nicht unerheblichen Aufwand verbunden.

Aus der GB 1 415 928 A ist bereits ein verfahrbarer Turmkran vorbekannt, der eine nicht drehbare Plattform hat, die über einen Drehkranz mit einer Drehplattform verbunden ist, welche Drehplattform die Kransäule des Turmkrans trägt. Der vorbekannte Turmkran weist des Weiteren einen horizontalen Ausleger, einen Ballast sowie ein vorderes und ein hinteres Paar Räder auf, die an der nicht-drehbaren Plattform befestigt sind, an der Stützarme mit Hubvorrichtungen angeordnet sind. Um den vorbekannten Turmkran mit seinem vollen Ballast sowohl in aufgerichteter als auch in zusammengeklappter Stellung über einen gegebenenfalls auch unebenen Boden bewegen zu können, ohne dass kritische Gewichtsverteilungen auftreten, welche die Räder des Krans überlasten und zu deren Blockierung und zu deren frühzeitigen Verschleiß führen könnten, ist vorgesehen, dass an der Kransäule ein Radgestell mit Stützrädern in einem Abstand von einer Gelenkachse derart angebracht ist, dass die Stützräder in der zusammengeklappten Stellung des Krans bei horizontal umgeklappter Kransäule hinter dem hinteren Paar Räder auf dem Boden aufgesetzt sind. Durch das Fahrgestell mit den Stützrädern wird das hintere Paar Räder, welches die Antriebsräder bilden kann, weitgehend entlastet, so dass der Kran nicht nur im aufgerichteten Zustand, sondern auch zusammengeklappt mit seinem Ballast in leichter Weise selbstfahrend transportiert werden kann.

Aus der DE 199 58 691 A1 ist bereits ein Fahrwerk vorbekannt, das mit wenigstens einer Radachse oder Rädern versehen und für einen weit ausladenden Bauhochkran vorgehsehen ist, wobei das vorbekannte Fahrwerk ein Fahrgestell hat, auf dem der Bauhochkran anbringbar oder angebracht ist. Um die Rangiermöglichkeiten unter beengten Verhältnissen am Aufstellungsort signifikant zu verbessern und um den Bauhochkran auch am Aufstellungsort rangieren zu können, ist das vorbekannnte Fahrwerk so ausgebildet, dass der Bauhochkran im Rangierbetrieb relativ zu der wenigsten einen Radachse horizontal drehbar und relativ zum Fahrgestell in zwei oder mehr unterschiedlichen Drehpositionen feststellbar ist, wobei mehrere unabhängig voneinander lenkbare Radachsen am Fahrgestell vorgesehen sein sollen.

Auch bei diesen vorbekannten Turmkränen und den dafür vorgesehenen Fahrwerken ist nachteilig, dass das Fahrgestell an dem vorbekannten Kran fest montiert ist, was mit einem erheblichen Aufwand und hohen Kosten verbunden ist.

Es besteht daher die Aufgabe, ein Fahrzeug der eingangs erwähnten Art zu schaffen, das den Transport sowie den Auf- und Abbau zumindest eines Kranes wesentlich erleichtert und das sich durch eine hohe Wirtschaftlichkeit auszeichnet.

Die erfindungsgemäße Lösung dieser Aufgabe besteht bei dem Fahrzeug der eingangs erwähnten Art darin, dass der zumindest eine Kran und das Fahrzeug in vertikaler Richtung derart relativ zueinander bewegbar sind, dass wenigstens ein Kran-Standfuß des zumindest einen Kranes zwischen einer auf dem Boden abgesenkten Gebrauchsstellung und einer über dem Boden angehobenen Transportstellung bewegbar ist.

Bei dem erfindungsgemäßen Fahrzeug sind die für den Einsatz des Kranes benötigen Ballast-Gewichte mittels einer Ballast-Hebeeinrichtung bewegbar. Dabei können die Ballast-Gewichte während des Transports unabhängig vom Kran auf dem verwendeten Transportfahrzeug abgelegt werden, um erst am Einsatzort von diesem Fahrzeug auf den Turmdrehkran verlegt zu werden. Dabei ist das Fahrzeug in jedem Fall regelmäßig ausreichend stabil, um auch schwere Ballast-Gewichte aufnehmen und transportieren zu können. Da die Ballast-Gewichte bei dem erfindungsgemäßen Fahrzeug während des Transports auf dem Fahrzeug abgelegt werden, ist der Transport sowie der Auf-und Abbau des zumindest einen Kranes auf besonders einfache Weise ohne größeren Aufwand möglich.

Da bei dem erfindungsgemäßen Fahrzeug wenigstens ein Kran-Standfuß des zumindest einen Kranes zwischen einer auf dem Boden abgesenkten Gebrauchsstellung und einer über dem Boden angehobenen Transportstellung bewegbar ist, wird nur ein Fahrzeug benötigt, um zumindest einen Kran und die zum Beschweren dieses zumindest einen Kranes vorgesehenen Ballastgewichte beispielsweise zu einem Einsatzort zu transportieren. Dadurch wird bei dem erfindungsgemäßen Fahrzeug der einfache Transport sowie der mit geringem Aufwand verbundene Auf- und Abbau zumindest eines Kranes begünstigt und die Wirtschaftlichkeit noch zusätzlich erhöht.

Um ein umständliches und zeitaufwendiges Festzurren des Kranes auf dem Fahrzeug zu vermeiden, ist es vorteilhaft, wenn zum lösbaren Befestigen des zumindest einen Kranes auf dem Fahrzeug eine Kupplung vorgesehen ist, die wenigstens ein an zumindest einem Kran vorgesehenes Kupplungselement hat, welches mit einem zugeordneten und auf dem Fahrzeug befindlichen Gegen-Kupplungselement zusammenwirkt.

Dabei sieht eine bevorzugte Ausführungsform gemäß der Erfindung, die eine rasche Verankerung zumindest eines Kranes auf dem erfindungsgemäßen Fahrzeug und ein schnelles Absetzen eines auf dem Fahrzeug gehaltenen Kranes ermöglicht, vor, dass die Kupplung in der Art einer als Sattel-Aufliegerkupplung ausgebildet ist, und dass das auf dem Fahrzeug vorgesehene Gegen-Kupplungselement dazu als Sattel-Kupplungsplatte und das an dem zumindest einen Kran vorgesehene Kupplungselement als Sattel-Kupplungszapfen ausgestaltet sind.

Um mit dem erfindungsgemäßen Fahrzeug wechselweise auch mehrere Kräne nacheinander beispielsweise zu ihren Einsatzorten transportieren zu können und um auf dem erfindungsgemäßen Fahrzeug auch unterschiedlich dimensionierte Kräne verfahren und beispielsweise am Einsatzort platzieren zu können, ist es vorteilhaft, wenn die Kupplung auf dem Fahrzeug in Fahrzeug-Längsrichtung verschieblich geführt und/oder in ihrer Relativposition zum Fahrzeug in vertikaler Richtung höhenverstellbar ist.

Aus dem gleichen Grund kann es zweckmäßig sein, wenn die Kupplung auf dem Fahrzeug quer zur Fahrzeug-Längsrichtung verschieblich geführt ist.

Eine konstruktiv einfache und bevorzugte Ausführungsform gemäß der Erfindung sieht vor, dass die Ballast-Hebeeinrichtung einen am Fahrzeug verschwenkbar gelagerten Schwenkarm hat, mittels dem Ballastgewichte zwischen einer auf dem Fahrzeug befindlichen Transportstellung und einer auf dem Kran vorgesehenen Gebrauchsstellung verschwenkbar sind.

Um den Kran auf einfache Weise in seine Relativposition zur Vertikalen ausrichten zu können, ist es vorteilhaft, wenn der Kran zumindest drei anheb- und absenkbare Kran-Standfüße hat. Dabei kann gegebenenfalls auch ein weiterer, am Kran unverrückbar gehaltener Kran-Standfuß vorgesehen sein, sofern zumindest drei Kran-Standfüße anheb- und absenkbar ausgestaltet sind.

Eine bevorzugte Weiterbildung gemäß der Erfindung sieht vor, dass die anheb- und absenkbaren Kran-Standfüße mittels zumindest einem Linear- und/oder Schwenkantrieb verfahrbar und/oder ausschwenkbar sind.

Um den Kran in seiner Gebrauchsstellung rasch und mit möglichst geringem Personalaufwand aufstellen und in die gewünschte Relativposition zur Vertikalen ausrichten zu können, sieht eine Weiterbildung gemäß der Erfindung vor, dass eine Steuerungseinheit vorgesehen ist, die mit dem zumindest einen Linear- und/oder Schwenkantrieb derart in Steuerverbindung steht, dass der Kran vorzugsweise während dem Absetzen der Kran-Standfüße auf dem Boden automatisch in die gewünschte Relativposition zur Senkrechten bringbar ist.

Um auch einen leistungsfähigen und entsprechend schweren Kran auf dem erfindungsgemäßen Fahrzeug montieren zu können, ist es vorteilhaft, wenn das Fahrzeug als Fahrzeug-Anhänger und insbesondere als Sattelauflieger ausgestaltet ist.

Der Kran lässt sich unmittelbar im Bereich der Baustelle mit Hilfe des Fahrzeuges absetzen, wenn der Kran an dem einer Anhängerkupplung abgewandten Endbereich des Fahrzeug-Anhängers lösbar befestigbar ist.

Um den Kran möglichst an dem einer Anhängerkupplung abgewandten Endbereich des Fahrzeug-Anhängers befestigen zu können, ist es vorteilhaft, wenn die Ballastgewichte in ihrer Transportstellung auf dem einer Anhängerkupplung zugewandten Endbereich des Fahrzeug-Anhängers ablegbar und vorzugsweise fixierbar sind.

Mit Hilfe des auf dem erfindungsgemäßen Fahrzeug vorgesehenen Kranes sind auch schwere Lasten anheb- und bewegbar, wenn der Kran als Turmdrehkran ausgebildet ist.

Die hohe Wirtschaftlichkeit des erfindungsgemäßen Fahrzeuges wird noch zusätzlich begünstigt, wenn dem Fahrzeug zumindest zwei wahlweise transportierbare Kräne gegebenenfalls auch verschiedene Typen und/oder Hersteller zugeordnet sind.

Um den Kran mit Hilfe des erfindungsgemäßen Fahrzeuges auch unter beengten Platzverhältnissen an den gewünschten Einsatzort platzieren zu können, ist es vorteilhaft, wenn der Fahrzeug-Anhänger vorzugsweise mittels zumindest einen Hilfsmotors als selbstfahrende Plattform ausgestaltet ist.

Die Beweglichkeit des Fahrzeug-Anhängers auch unter beengten Platzverhältnissen wird noch begünstigt, wenn der Fahrzeug-Anhänger als teilbarer Anhänger und/oder als teleskopierbarer Anhänger ausgestaltet ist.

Weitere Merkmale gemäß der Erfindung ergeben sich aus den Ansprüche in Verbindung mit der Beschreibung und den Figuren. Nachstehend wird die Erfindung anhand eines bevorzugten Ausführungsbeispieles noch näher beschrieben.

Es zeigt:
- Fig.1: eine Zugmaschine mit einem Fahrzeug-Anhänger, auf dem ein in seine Transportstellung zusammengelegter Kran gehalten ist, und
- Fig.2: die Zugmaschine und den Fahrzeug-Anhänger aus Figur 1, in einer Seitenansicht, wobei der Kran vom Fahrzeug-Anhänger bereits gelöst wurde, und
- Fig.3: den Fahrzeug-Anhänger aus Fig. 1 und 2 in einer Draufsicht.

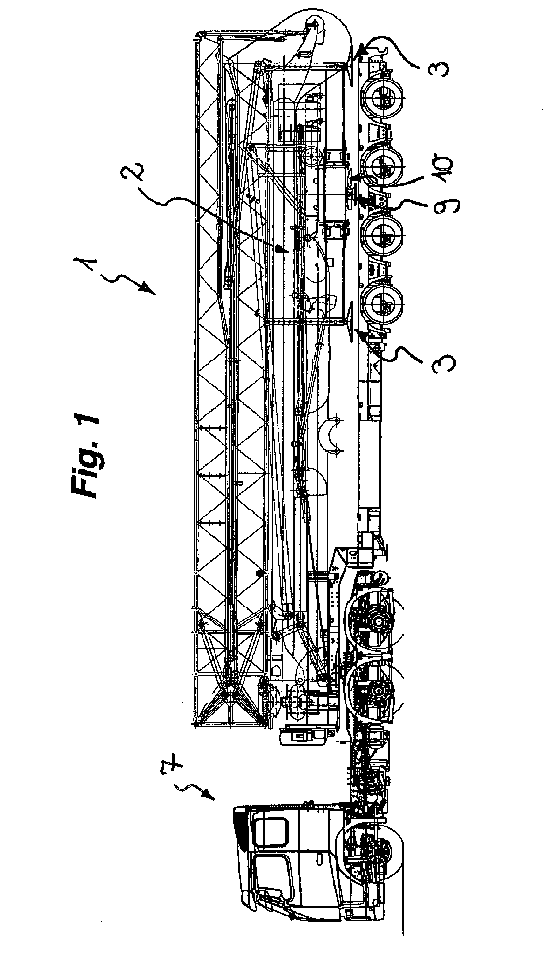

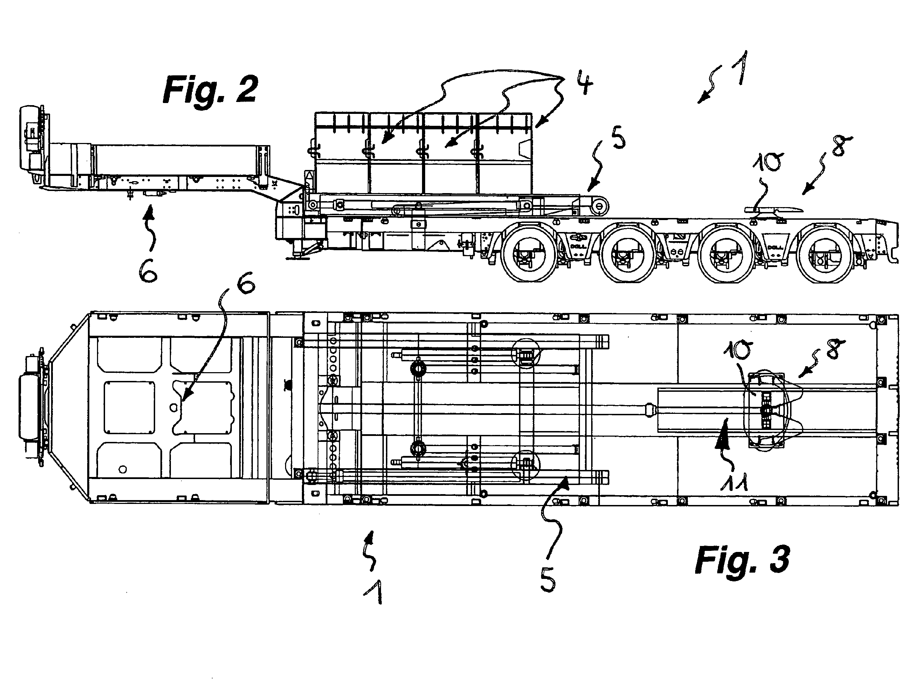

In den Figuren 1 bis 3 ist ein als Fahrzeug-Anhänger und insbesondere als Sattelauflieger ausgestaltetes Fahrzeug 1 dargestellt, auf dem ein Kran 2 lösbar befestigbar ist. Der Kran 2 und das Fahrzeug 1 sind in vertikaler Richtung derart relativ zueinander bewegbar, dass wenigstens ein Kran-Standfuß 3 des Kranes 2 zwischen einer auf den Boden abgesenkten Gebrauchsstellung und einer über den Boden angehobenen Transportstellung bewegbar ist. Die in Gebrauchsstellung des Kranes benötigten und in Fig. 2 näher dargestellten Ballast-Gewichte 4 sind mittels einer Ballast-Hebeeinrichtung 5 zwischen einer auf dem Fahrzeug befindlichen Transportstellung und einer auf dem Kran vorgesehenen Gebrauchsstellung bewegbar.

Zum lösbaren Befestigen des Kranes 2 auf dem Fahrzeug 1 ist eine Kupplung 8 vorgesehen, die wenigstens ein an dem Kran 2 vorgesehenes Kupplungselement hat, welches mit einem zugeordneten und auf dem Fahrzeug 1 befindlichen Gegen-Kupplungselement zusammenwirkt. Während das auf dem Fahrzeug 1 befindliche Gegen-Kupplungselement als Sattel-Kupplungsplatte 10 ausgestaltet ist, ist das an der Unterseite des Kranes 2 angeordnete Kupplungselement als Sattel-Kupplungszapfen 9 ausgestaltet. In Fig. 3 ist erkennbar, dass das auf dem Fahrzeug 1 vorgesehene und hier als Sattel-Kupplungsplatte 10 ausgestaltete Gegen-Kupplungselement mittels einer Verstelleinrichtung 11 verschieblich auf dem Fahrzeug 1 geführt ist. Das Gegen-Kupplungselement ist mittels der Verstelleinrichtung 11 in Fahrzeug-Längsrichtung verschieblich geführt und kann auf diese Weise an verschiedene, unterschiedlich dimensionierte Kräne 2 leicht angepasst werden. Darüber hinaus kann es vorteilhaft sein, wenn das am Fahrzeug befindliche Gegen-Kupplungselement in seiner Relativposition zum Fahrzeug 1 in vertikaler Richtung auch höhenverstellbar ist. Um den mit Hilfe des Fahrzeuges 1 transportierten Kran am Einsatzort genau positionieren zu können, ist es vorteilhaft, wenn der Kran 2 mit Hilfe der Verstelleinrichtung 11 auch quer zur Fahrzeug-Längsrichtung verschieblich geführt ist. Dabei ist die Drehachse zwischen der Sattel-Kupplungsplatte 10 der Kupplung 8 einerseits und der an der Unterseite des Kranes 2 vorgesehene Sattel-Kupplungszapfen 9 vorzugsweise in der Drehachse des Kranes 2 angeordnet, sodass der mittels der Verstelleinrichtung 11 in X- und Y-Richtung verschieblich geführte und gegebenenfalls auch in Z-Richtung höhenverstellbare Kran am Einsatzort möglichst genau positioniert und vom Fahrzeug 1 herab aufgestellt werden kann.

Die Ballast-Hebeeinrichtung 5 hat einen am Fahrzeug 1 verschwenkbar gelagerten Schwenkarm, mittels dem die Ballast-Gewichte 4 zwischen einer auf dem Fahrzeug befindlichen Transportstellung und einer auf dem Kran 2 vorgesehenen Gebrauchsstellung bewegbar sind.

Aus einem Vergleich der Figuren 1 und 2 ist erkennbar, dass der Kran vorzugsweise vier anheb- und absenkbare Kran-Standfüße 3 hat, die vorzugsweise unabhängig voneinander mittels zumindest einem Linear- und/oder Schwenkantrieb verfahrbar und/oder ausschwenkbar sind. Dabei ist den Kran-Standfüßen 3 eine hier nicht weiter gezeigte Steuerungseinheit zugeordnet, die mit den Linear- und/oder Schwenkantrieben der Kran-Standfüße 3 in Steuerverbindung steht, derart, dass der Kran 2 vorzugsweise während dem Absetzen der Kran-Standfüße 3 auf dem Boden automatisch in die gewünschte Relativposition zur Senkrechten bringbar ist.

Das hier als Sattelauflieger ausgestaltete Fahrzeug 1 weist eine Anhängerkupplung 6 auf, die mit einer Zugmaschine 7 lösbar verbunden ist. Der Kran 2 ist hier als Turmdrehkran ausgebildet und vermag auch schwere Lasten zu tragen. Um die Wirtschaftlichkeit zu erhöhen, sind der Zugmaschine 7 und dem Fahrzeug 1 mehrere Kräne 2, gegebenenfalls auch unterschiedlicher Typen und/oder Hersteller zugeordnet, die wahlweise auf dem Fahrzeug 1 transportiert werden können. Dabei kann das Fahrzeug 1 mit Hilfe der Verstelleinrichtung 11 auch an verschiedene, unterschiedlich dimensionierte Kräne 2 angepasst werden. Das hier dargestellte Fahrzeug 1 und der darauf befindliche Kran 2 können ohne ein weiteres Begleitfahrzeug und insbesondere ohne ein für die Ballast-Gewichte bestimmtes Begleitfahrzeug transportiert werden. Am Einsatzort lässt sich der Kran 2 mittels der Steuerungseinrichtung rasch und auf einfache Weise absetzen und in seiner Relativposition zur Vertikalen hin ausrichten. Da die in Gebrauchsstellung des Kranes 2 benötigten Ballast-Gewichte 4 mittels der Ballast-Hebeeinrichtung 5 bewegt werden können, ist die Ballastierung des Kranes in seiner Gebrauchsstellung auch ohne einen weiteren Autokran oder ohne einen Krangalgen an dem Turmdrehkran möglich. Das Fahrzeug 1 kann über eine Hubhilfe verfügen, welche das Niveau der Kranfixierung 8 variabel gestaltet und somit ein Aufnehmen und Absetzen des Kranes 2 ermöglicht. Der Kran 2 weist in den Eckbereichen seiner Grundfläche die Kran-Standfüße 3 auf, die den Kran 2 in seine vom Boden beabstandete Gebrauchsstellung bewegen. In dieser vom Boden abgehobenen Gebrauchsstellung kann der Kran 2 vom Fahrzeug 1 derart unterfahren werden, dass sich der Kran 2 anschließend auch wieder auf das Fahrzeug 1 absenken und dort lösbar befestigen lässt. An den Kran-Standfüßen 3 kann eine einschiebbare Abstützfläche vorgesehen sein, die den Halt des Kranes 2 insbesondere auch bei nachgiebigen Bodenverhältnissen verbessert.

## Patentansprüche

1. Fahrzeug (1), das zum Transportieren zumindest eines Krans (2) sowie der zum Beschweren des Krans (2) mit bestimmten Ballast-Gewichte (4) ausgebildet ist, wobei das Fahrzeug (1) eine Ballast-Hebeeinrichtung (5) hat, mittels der Ballast-Gewichte (4) zwischen einer auf dem Fahrzeug (1) befindlichen Transportstellung und einer auf dem Kran (2) vorgesehenen Gebrauchsstellung bewegbar sind, **dadurch gekennzeichnet, dass** der zumindest eine Kran (2) und das Fahrzeug (1) in vertikaler Richtung derart relativ zueinander bewegbar sind, dass wenigstens ein Kran-Standfuß (3) des zumindest einen Kranes (2) zwischen einer auf dem Boden abgesenkten Gebrauchsstellung und einer über dem Boden angehobenen Transportstellung bewegbar ist.

2. Fahrzeug nach Anspruch 1, **dadurch gekennzeichnet, dass** zum lösbaren Befestigen des zumindest einen Kranes (2) auf dem Fahrzeug (1) eine Kupplung (8) vorgesehen ist, die wenigstens ein an zumindest einem Kran (2) vorgesehenes Kupplungselement hat, welches mit einem zugeordneten und am Fahrzeug (1) befindlichen Gegen-Kupplungselement zusammenwirkt.

3. Fahrzeug nach Anspruch 1 oder 2, **dadurch gekennzeichnet, dass** die Kupplung (8) als Sattel-Aufliegerkupplung ausgebildet ist, und dass das an dem zumindest einen Kran vorgesehene Kupplungselement als Sattel-Kupplungszapfen (9) und das am Fahrzeug (1) vorgesehene Gegen-Kupplungselement als Sattel-Kupplungsplatte (10) ausgestaltet sind.

4. Fahrzeug nach Anspruch 3, **dadurch gekennzeichnet, dass** das Gegen-Kupplungselement am Fahrzeug (1) in Fahrzeug-Längsrichtung verschieblich geführt und/oder in seiner Relativposition zum Fahrzeug (1) in vertikaler Richtung höhenverstellbar ist.

5. Fahrzeug nach Anspruch 3 oder 4, **dadurch gekennzeichnet, dass** das Gegen-Kupplungselement am Fahrzeug (1) quer zur Fahrzeug-Längsrichtung verschieblich geführt ist.

6. Fahrzeug nach einem der Ansprüche 1 bis 5, **dadurch gekennzeichnet, dass** die Ballast-Hebeeinrichtung (5) einen am Fahrzeug 81) verschwenkbar gelagerten Schwenkarm hat, mittels dem Ballast-Gewichte (4) zwischen einer auf dem Fahrzeug (1) befindlichen Transportstellung und einer auf dem Kran (2) vorgesehenen Gebrauchsstellung verschwenkbar sind.

7. Fahrzeug nach einem der Ansprüche 1 bis 6, **dadurch gekennzeichnet, dass** der Kran (2) zumindest drei von vorzugsweise vier anheb- und absenkbare Kran-Standfüße (3) hat, und dass diese Kran-Standfüße (3) vorzugsweise unabhängig voneinander anheb- und absenkbar sind.

8. Fahrzeug nach Anspruch 7, **dadurch gekennzeichnet, dass** die anheb- und absenkbaren Kran-Standfüße (3) mittels zumindest einem Linear- und/oder Schwenkantrieb verfahrbar und/oder ausschwenkbar sind.

9. Fahrzeug nach Anspruch 8, **dadurch gekennzeichnet, dass** eine Steuerungseinheit vorgesehen ist, die mit dem zumindest einen Linear- und/oder Schwenkantrieb derart in Steuerverbindung steht, dass der Kran (2) vorzugsweise während dem Absetzen der Kran-Standfüße (3) auf dem Boden automatisch in die gewünschte Relativposition zur Senkrechten bringbar ist.

10. Fahrzeug nach einem der Ansprüche 1 bis 9, **dadurch gekennzeichnet, dass** das Fahrzeug (1) als Fahrzeug-Anhänger und insbesondere als Sattelauflieger ausgestaltet ist.

11. Fahrzeug nach einem der Ansprüche 1 bis 10, **dadurch gekennzeichnet, dass** der Kran (2) an dem einer Anhängerkupplung (6) abgewandten Endbereich des Fahrzeug-Anhängers lösbar befestigbar ist.

12. Fahrzeug nach einem der Ansprüche 1 bis 11, **dadurch gekennzeichnet, dass** die Ballast-Gewichte (4) in ihrer Transportstellung auf dem einer Anhängerkupplung (6) zugewandten Endbereich des Fahrzeug-Anhängers ablegbar und fixierbar sind.

13. Fahrzeug nach einem der Ansprüche 1 bis 12, **dadurch gekennzeichnet, dass** der Kran (2) als Turmdrehkran ausgebildet ist.

14. Fahrzeug nach einem der Ansprüche 1 bis 13, **dadurch gekennzeichnet, dass** dem Fahrzeug zumindest zwei wahlweise transportierbare Kräne (2), gegebenenfalls auch unterschiedlicher Typen und/oder Hersteller, zugeordnet sind.

15. Fahrzeug nach einem der Ansprüche 8 bis 14, **dadurch gekennzeichnet, dass** der Fahrzeug-Anhänger vorzugsweise mittels zumindest einem Hilfsmotor als selbstfahrende Plattform ausgebildet ist.

16. Fahrzeug nach einem der Ansprüche 8 bis 15, **dadurch gekennzeichnet, dass** der Fahrzeug-Anhänger als teilbarer Anhänger und/oder als teleskopierbarer Anhänger ausgestaltet ist.

## Claims

1. Vehicle (1) which is designed for transporting at least one crane (2) and the ballast weights (4) which are also intended for weighting the crane (2), wherein the vehicle (1) has a ballast-lifting device (5), by means of which ballast weights (4) are movable between a transport position situated on the vehicle (1) and a usage position provided on the crane (2), **characterised in that** the at least one crane (2) and the vehicle (1) are movable relative to one another in the vertical direction such that at least one crane support foot (3) of the at least one crane (2) is movable between a usage position lowered onto the ground and a transport position raised above the ground.

2. Vehicle as claimed in claim 1, **characterised in that**, for detachable attachment of the at least one crane (2) on the vehicle (1), a coupling (8) is provided which has at least one coupling element which is provided on at least one crane (2) and interacts with an allocated counter-coupling element which is situated on the vehicle (1).

3. Vehicle as claimed in claim 1 or 2, **characterised in that** the coupling (8) is designed as a semitrailer coupling, and **in that** the coupling element provided on the at least one crane is configured as a fifth-wheel kingpin (9) and the counter-coupling element provided on the vehicle (1) is configured as a semitrailer coupling plate (10).

4. Vehicle as claimed in claim 3, **characterised in that** the counter-coupling element on the vehicle (1) is guided so as to be displaceable in the longitudinal direction of the vehicle and/or is height-adjustable in the vertical direction in its relative position with respect to the vehicle (1).

5. Vehicle as claimed in claim 3 or 4, **characterised in that** the counter-coupling element on the vehicle (1) is guided so as to be displaceable transversely with respect to the longitudinal direction of the vehicle.

6. Vehicle as claimed in any one of claims 1 to 5, **characterised in that** the ballast-lifting device (5) has a pivot arm pivotably mounted on the vehicle (1), which pivot arm can pivot ballast weights (4) between a transport position situated on the vehicle (1) and a usage position provided on the crane (2).

7. Vehicle as claimed in any one of claims 1 to 6, **characterised in that** the crane (2) has at least three of preferably four crane support feet (3) which can be raised or lowered, and **in that** these crane support feet (3) can be raised and lowered preferably independently of each other.

8. Vehicle as claimed in claim 7, **characterised in that** the crane support feet (3) which can be raised and lowered can be displaced and/or pivoted out by means of at least one linear and/or pivoting drive.

9. Vehicle as claimed in claim 8, **characterised in that** a control unit is provided which is in a controlling connection with the at least one linear and/or pivoting drive in such a manner that preferably when the crane support feet (3) are being set down on the ground the crane (2) can be brought automatically to the desired relative position with respect to the perpendicular.

10. Vehicle as claimed in any one of claims 1 to 9, **characterised in that** the vehicle (1) is configured as a vehicle trailer and in particular as a semitrailer.

11. Vehicle as claimed in any one of claims 1 to 10, **characterised in that** the crane (2) can be detachably attached to the end region of the vehicle trailer which faces away from a trailer coupling (6).

12. Vehicle as claimed in any one of claims 1 to 11, **characterised in that** in their transport position the ballast weights (4) can be stored and secured on the end region of the vehicle trailer which faces towards a trailer coupling (6).

13. Vehicle as claimed in any one of claims 1 to 12, **characterised in that** the crane (2) is designed as a revolving tower crane.

14. Vehicle as claimed in any one of claims 1 to 13, **characterised in that** at least two optionally transportable cranes (2), possibly even of different types and/or from different manufacturers, are allocated to the vehicle.

15. Vehicle as claimed in any one of claims 8 to 14, **characterised in that** the vehicle trailer is designed as a self-propelled platform preferably by means of at least one auxiliary engine.

16. Vehicle as claimed in any one of claims 8 to 15, **characterised in that** the vehicle trailer is configured as a divisible trailer and/or as a telescopic trailer.

## Revendications

1. Véhicule (1) réalisé pour transporter au moins une grue (2) ainsi que les masses de lestage (4) déterminées servant à lester la grue (2), le véhicule (1) ayant un dispositif de levage de lestage (5) à l'aide duquel des masses de lestage (4) peuvent être déplacées entre une position de transport se trouvant sur le véhicule (1) et une position d'utilisation prévue sur la grue (2), **caractérisé en ce que** l'au moins une grue (2) et le véhicule (1) peuvent être déplacés de telle sorte l'un par rapport à l'autre dans la direction verticale qu'au moins un pied de grue (3) de l'au moins une grue (2) peut être déplacé entre une position d'utilisation abaissée sur le sol et une position de transport soulevée au-dessus du sol.

2. Véhicule selon la revendication 1, **caractérisé en ce qu'**un couplage (8) est prévu ayant au moins un élément de couplage prévu au niveau d'au moins une grue (2) et entrant en interaction avec un élément de contre-couplage associé et se trouvant au niveau du véhicule (1) afin de réaliser la fixation amovible de l'au moins une grue (2) sur le véhicule (1).

3. Véhicule selon la revendication 1 ou 2, **caractérisé en ce que** le couplage (8) prend la forme d'un couplage de semi-remorque et que l'élément de couplage prévu au niveau de l'au moins une grue prend la forme d'un tenon de couplage à sellette (9) et que l'élément de contre-couplage prévu au niveau du véhicule (1) prend la forme d'une plaque de couplage à sellette (10).

4. Véhicule selon la revendication 3, **caractérisé en ce que** l'élément de contre-couplage est guidé de façon coulissante au niveau du véhicule (1) dans la direction longitudinale de véhicule et/ou est réglable en hauteur dans sa position relative par rapport au véhicule (1) dans la direction verticale.

5. Véhicule selon la revendication 3 ou 4, **caractérisé en ce que** l'élément de contre-couplage est guidé de façon coulissante au niveau du véhicule (1), transversalement à la direction longitudinale de véhicule.

6. Véhicule selon l'une quelconque des revendications 1 à 5, **caractérisé en ce que** le dispositif de levage de lestage (5) a un bras basculant disposé de façon à pouvoir être pivoté au niveau du véhicule (1), à l'aide duquel les masses de lestage (4) peuvent être pivotées entre une position de transport se trouvant sur le véhicule (1) et une position d'utilisation prévue sur la grue (2).

7. Véhicule selon l'une quelconque des revendications 1 à 6, **caractérisé en ce que** la grue (2) a au moins trois, de préférence quatre, pieds de grue (3) levables et descendables et que ces pieds de grue (3) peuvent être levés et descendus de préférence indépendamment l'un de l'autre.

8. Véhicule selon la revendication 7, **caractérisé en ce que** les pieds de grue (3) levables et descendables peuvent être déplacés et/ou pivotés vers l'extérieur à l'aide d'au moins un entraînement linéaire et/ou pivotant.

9. Véhicule selon la revendication 8, **caractérisé en ce qu'**une unité de commande est prévue en liaison de commande avec l'au moins un entraînement linéaire et/ou pivotant de telle sorte que la grue (2) puisse être ramenée de préférence automatiquement pendant le rabaissement des pieds de grue (3) sur le sol dans la position relative souhaitée par rapport à la verticale.

10. Véhicule selon l'une quelconque des revendications 1 à 9, **caractérisé en ce que** le véhicule (1) prend la forme d'une remorque de véhicule et notamment d'une semi-remorque.

11. Véhicule selon l'une quelconque des revendications 1 à 10, **caractérisé en ce que** la grue (2) peut être fixée de façon amovible au niveau de la région d'extrémité de la remorque de véhicule opposée à un couplage de remorque (6).

12. Véhicule selon l'une quelconque des revendications 1 à 11, **caractérisé en ce que** les masses de lestage (4) peuvent être fixées et descendues dans leur position de transport sur la région d'extrémité de la remorque de véhicule orientée vers un couplage de remorque (6).

13. Véhicule selon l'une quelconque des revendications 1 à 12, **caractérisé en ce que** la grue (2) prend la forme d'une grue à tourelle pivotante.

14. Véhicule selon l'une quelconque des revendications 1 à 13, **caractérisé en ce qu'**au moins deux grues (2) pouvant être transportées en option, le cas échéant également de types et/ou fabricants différents, sont associées au véhicule.

15. Véhicule selon l'une quelconque des revendications 8 à 14, **caractérisé en ce que** la remorque de véhicule est réalisée de préférence à l'aide d'au moins un moteur auxiliaire prenant la forme d'une plateforme automotrice.

16. Véhicule selon l'une quelconque des revendications 8 à 15, **caractérisé en ce que** la remorque de véhicule prend la forme d'une remorque divisible et/ou d'une remorque télescopique.
